# EUROPÄISCHE PATENTANMELDUNG

(11) **EP 2 582 012 A1**
(43) Veröffentlichungstag der Anmeldung: **17.04.2013**
(21) Anmeldenummer: 11184982.4
(22) Anmeldetag: 13.10.2011
(51) Int. Cl.: H02J 9/06, G06F 1/30

(54) **Verfahren zum Betreiben eines elektrischen Gerätes**

(71) Anmelder: Siemens Aktiengesellschaft, 80333 München (DE)
(72) Erfinder: Neubert, Axel, 76275 Ettlingen (DE); Schlink, Christian, 76829 Landau (DE)

(57) **Zusammenfassung**

Die Erfindung betrifft ein Verfahren zum Betreiben eines elektrischen Gerätes (1), das mehrere jeweils mit einer internen Reset-Schaltung (12, 13, 14) versehene Hardware-Komponenten (3, 4, 5) aufweist, welche jeweils mit mindestens einer von mehreren Versorgungsspannungen eines Netzteils (2) beaufschlagt werden, die mittels des Netzteils (2) aus einer Eingangsspannung erzeugt werden, wobei die Hardware-Komponenten (3, 4, 5) mittels ihrer jeweiligen Reset-Schaltung (12, 13, 14) in Abhängigkeit ihrer jeweiligen Versorgungsspannung in einen definierten Anfangszustand gesetzt werden. Es werden Maßnahmen vorgeschlagen, mittels denen in allen Hardware-Komponenten (3, 4, 5) nach einem vorübergehenden Netzausfall ein Reset ausgelöst wird und alle Hardware-Komponenten (3, 4, 5) von einem definierten Zustand "weiterlaufen" bzw. betrieben werden können.

## Beschreibung

Die Erfindung betrifft ein Verfahren zum Betreiben eines elektrischen Gerätes, das mehrere jeweils mit einer internen Reset-Schaltung versehene Hardware-Komponenten aufweist, welche jeweils mit mindestens einer von mehreren Versorgungsspannungen eines Netzteils beaufschlagt werden, die mittels des Netzteils aus einer Eingangsspannung erzeugt werden, wobei die Hardware-Komponenten mittels ihrer jeweiligen Reset-Schaltung in Abhängigkeit ihrer jeweiligen Versorgungsspannung in einen definierten Anfangszustand gesetzt werden. Darüber hinaus betrifft die Erfindung ein elektrisches Gerät, welches zur Durchführung des Verfahrens geeignet ist.

In zunehmendem Maße werden in so genannten z. B. aus dem Siemens-Katalog ST 80/ST PC, Kapitel 5, Ausgabe 2010 bekannten Industrie Personal Computern (Industrie-PCs) Hardware-Komponenten eingesetzt, die mit einer seriellen Schnittstelle versehen sind. Im Unterschied zu einer mit einer parallelen Schnittstelle versehenen Hardware-Komponente weist eine seriell betriebene Hardware-Komponente - z. B. eine mit einer SATA- oder SAS-Schnittstelle versehene Hardware-Komponente - keinen Anschluss (Hardware-Reset-Eingang) zum Anschließen einer Reset-Leitung auf, mittels welcher im Rahmen eines Hardware-Resets die Komponente zurückgesetzt, d. h. in einen definierten Anfangszustand gesetzt werden kann.

Eine mit einer seriellen Schnittstelle versehene Hardware-Komponente weist gewöhnlich eine interne Reset-Schaltung auf, welche in Abhängigkeit einer für diese Hardware-Komponente vorgesehenen Versorgungsspannung oder in Abhängigkeit von mehreren für diese Hardware-Komponente vorgesehenen Versorgungsspannungen die Komponente zurücksetzt. Für den Fall, dass z. B. die anliegende Versorgungsspannung einen Schwellwert erreicht oder unterschreitet, erzeugt die Reset-Schaltung ein Reset-Signal zum Zurücksetzen dieser Hardware-Komponente.

Die bekannten Industrie-PCs sind mit einer Vielzahl von Hardware-Komponenten versehen, welche mit unterschiedlichen Versorgungsspannungen, beispielsweise mit einer 3,3 V-, 5 V- oder 12 V-Spannung, beaufschlagt werden. Diese Spannungen erzeugt ein Netzteil des Industrie-PCs aus einer Eingangsspannung bzw. Netzspannung, z. B. aus einer 230 V-Wechselspannung.

Es kann nun vorkommen, dass aufgrund eines vorübergehenden Netzausfalls, insbesondere aufgrund eines zyklischen Netzausfalls mit unterschiedlichen Puls-Pausen-Verhältnissen, während des kurzzeitigen Ausfalls der Eingangsspannung nicht alle Versorgungsspannungen den jeweiligen Schwellwert erreichen oder unterschreiten. Dies bewirkt, dass in nicht allen Hardware-Komponenten mittels der jeweiligen Reset-Schaltungen ein Reset ausgelöst wird und während der anschließenden Wiederkehr der Eingangsspannung nicht alle Hardware-Komponenten von einem definierten Zustand "weiterlaufen" bzw. betrieben werden können. Dies führt gewöhnlich zu Störungen bzw. zu einem Fehlverhalten im Hinblick auf das Zusammenwirken der Hardware-Komponenten und wirkt sich daher störend bezüglich eines ordnungsgemäßen Betriebs des Industrie-PCs aus.

Der Erfindung liegt daher die Aufgabe zugrunde, ein Verfahren der eingangs genannten Art anzugeben, welches derartige Nachteile vermeidet. Darüber hinaus ist ein elektrisches Gerät zu schaffen, welches zur Durchführung des Verfahrens geeignet ist.

Diese Aufgabe wird im Hinblick auf das Verfahren durch die im kennzeichnenden Teil des Anspruchs 1, bezüglich des elektrischen Gerätes durch die im kennzeichnenden Teil des Anspruchs 3 angegebenen Maßnahmen gelöst.

Die Erfindung geht von der Idee aus, nach einer Wiederkehr der Eingangsspannung die Hardware-Komponenten so lange mit der Versorgungsspannung nicht zu beaufschlagen bzw. die Beaufschlagung der Hardware-Komponenten mit den Versorgungsspannungen so lange zu verhindern, bis diese Komponenten mittels ihrer internen Reset-Schaltung zurückgesetzt werden.

Vorteilhaft ist, dass insbesondere im Rahmen zyklischer Netzausfälle mit unterschiedlichen Puls-Pausen-Verhältnissen alle Hardware-Komponenten sicher zurückgesetzt werden, um dadurch Störungen nach vorübergehenden Netzausfällen zu vermeiden.

In einer Ausgestaltung der Erfindung ist vorgesehen, dass bei einem Ausfall der Eingangsspannung mittels der Überwachungseinheit dem jeweiligen Versorgungseingang der Hardware-Komponenten ein Widerstand über einen steuerbaren Schalter zugeschaltet wird. Mittels derartiger Maßnahmen unterschreiten die an der jeweiligen Hardware-Komponente anliegenden Spannungen schneller den jeweiligen Schwellwert zum Zurücksetzen der jeweiligen Komponente.

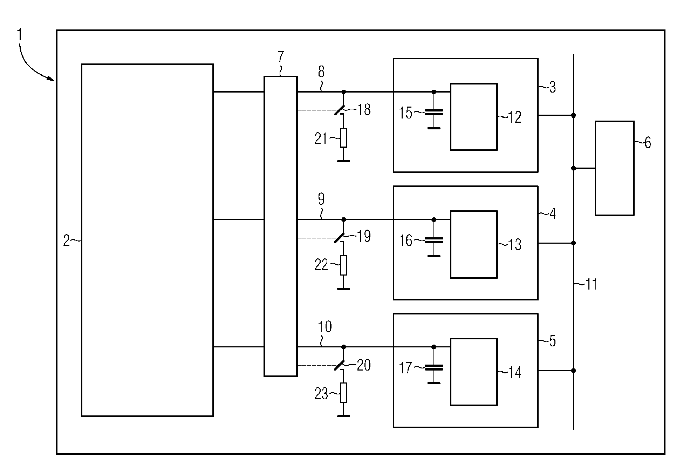

Die Erfindung wird nachfolgend anhand eines Ausführungsbeispiels unter Bezugnahme auf die einzige Figur der Zeichnung näher erläutert. Die Figur der Zeichnung zeigt in vereinfachter Form Bestandteile eines elektrischen Gerätes.

In der Figur ist mit 1 eine Systemeinheit eines Industrie-PCs (Industrie Personal Computer) bezeichnet, welche ein Netzteil 2, drei z. B. mit einer SATA- oder SAS-Schnittstelle versehene Hardware-Komponenten 3, 4, 5 sowie eine CPU-Komponente 6 aufweist. Die Hardware-Komponenten 3, 4, 5 sind mit unterschiedlichen geeigneten Versorgungsspannungen beaufschlagt, welche das Netzteil 2 aus einer hier nicht dargestellten 230 V-Wechselspannung erzeugt und über eine Überwachungseinheit 7 sowie über Versorgungsleitungen 8, 9, 10 den Hardware-Komponenten 3, 4, 5 bereitstellt. Selbstverständlich weist die Systemeinheit 1 eine Vielzahl von Steckplätzen eines so genannten Motherboards auf, in welche geeignete Hardware-Komponenten in Form von Steckkarten, z. B. Steckkarten zur Verwirklichung einer Ethernet- oder Feldbuskommunikation, gesteckt sind. Ferner sind an diese Systemeinheit 1 Bedieneingabe-Einheiten, z. B. Bedieneingabe-Einheiten in Form einer Tastatur und/oder einer Maus, sowie mindestens ein Bildwiedergabegerät und weitere Hardware-Einheiten bzw. Komponenten anschließbar. Weitere Bestandteile der Systemeinheit 1, wie beispielsweise ein Arbeitsspeicher, Adressleitungen oder sonstige für den Betrieb des Industrie-PCs geeignete Hard- oder Softwaremittel, sind für die Erfindung ohne Bedeutung und werden daher nicht erläutert.

Die Hardware-Komponenten 3, 4, 5 sind mit der CPU-Komponente 6 über eine Datenleitung 11 verbunden, die für einen seriellen Datenaustausch zwischen diesen Komponenten 3, 4, 5, 6 vorgesehen ist, wobei die Hardware-Komponenten 3, 4, 5 keinen Anschluss (Hardware-Reset-Eingang) zum Anschließen einer Reset-Leitung aufweisen, mittels welcher im Rahmen eines Hardware-Resets die Komponente zurückgesetzt, d. h. in einen definierten Anfangszustand gesetzt werden kann. Stattdessen sind diese Hardware-Komponenten 3, 4, 5 jeweils mit einer internen Reset-Schaltung 12, 13, 14 versehen, welche in Abhängigkeit der für diese Hardware-Komponenten 3, 4, 5 vorgesehenen Versorgungsspannungen die Komponenten zurücksetzt.

Es wird im Folgenden angenommen, dass für die Hardware-Komponente 3 eine 3,3 V-, für die Hardware-Komponente 4 eine 5 V-und für die Hardware-Komponente 5 eine 12 V-Versorgungsspannung vorgesehen ist. Für den Fall, dass beispielsweise die 3,3 V-Versorgungsspannung unter einen für die Hardware-Komponente 3 vorgesehenen Schwellwert von ca. 2,5 V abfällt, erzeugt die Reset-Schaltung 12 dieser Hardware-Komponente 3 ein Reset bzw. ein Reset-Signal, aufgrund dessen die Hardware-Komponente 3 in einen definierten Anfangszustand zurückgesetzt wird. Entsprechend erzeugen die Reset-Schaltungen 13 bzw. 14 ein Reset bzw. ein Reset-Signal zum Zurücksetzen der Hardware-Komponenten 4 bzw. 5, falls beispielsweise die für die Hardware-Komponente 4 vorgesehene Versorgungsspannung unter einen Schwellwert von 4,5 V bzw. die für die Hardware-Komponente 5 vorgesehene Versorgungsspannung unter einen Schwellwert von 10 V absinkt.

Es wird im Folgenden ferner angenommen, dass vorübergehend die 230 V-Netzspannung ausfällt. Um zu vermeiden, dass die Hardware-Komponenten 3, 4, 5 unterschiedlich auf den vorübergehenden Netzausfall reagieren, was sich störend auf einen ordnungsgemäßen Betrieb nach der Wiederkehr der Eingangsspannung und somit nach der Wiederkehr der Versorgungsspannungen auswirken kann, verhindert die Überwachungseinheit 7 nach dem Ausfall bzw. der Wiederkehr der 230 V-Netzspannung für eine vorgegebene Zeitspanne, dass die Versorgungsspannungen den Hardware-Komponenten 3, 4, 5 aufgeschaltet werden. Erst nach Ablauf dieser vorgegebenen Zeitspanne werden die jeweiligen Hardware-Komponenten 3, 4, 5 mit den jeweiligen Versorgungsspannungen 3,3 V, 5 V, 12 V beaufschlagt. Diese Zeitspanne ist so gewählt, dass die während des Ausfalls der an den Hardware-Komponenten 3, 4, 5 anliegenden Spannungen, welche mittels geeigneter Schaltungen gepuffert sind, was in der Zeichnung mittels Kondensatoren 15, 16, 17 veranschaulicht ist, unter den Wert der jeweiligen Schwellspannungen fallen. Dadurch wird sicher gewährleistet, dass die Reset-Schaltungen 12, 13, 14 die Hardware-Komponenten 3, 4, 5 zurücksetzen.

Ohne die Überwachungseinheit 7, welche - wie beschrieben - nach der Wiederkehr der 230 V-Netzspannung erst nach einer vorgegebenen Zeitspanne die Versorgungsspannungen den Komponenten 3, 4, 5 aufschaltet und dadurch sicher gewährleistet wird, dass die Reset-Schaltungen 12, 13, 14 die Hardware-Komponenten 3, 4, 5 zurücksetzen, könnte es nämlich vorkommen, dass nach dem kurzzeitigen Netzausfall nicht alle Hardware-Komponenten 3, 4, 5 zurückgesetzt werden. Z. B. könnte während der Ausfallzeit die an der Hardware-Komponente 4 anliegende Spannung 16 noch nicht unter den Schwellwert von 4,5 V gefallen sein, die Versorgungsspannungen der Hardware-Komponenten 3 und 5 jedoch bereits unter die jeweiligen Schwellwerte von 2,5 V und 10 V, was bewirkt, dass die Reset-Schaltungen 12 und 14 die Hardware-Komponenten 3 und 5 zurücksetzen würden, die Reset-Schaltung 13 würde jedoch kein Reset-Signal zum Zurücksetzen der Hardware-Komponente 5 erzeugen.

Um sicherzustellen, dass bei einem Ausfall der Eingangsspannung die an der jeweiligen Hardware-Komponente 3, 4, 5 anliegende Spannung schneller den jeweiligen Schwellwert zum Zurücksetzen der jeweiligen Hardware-Komponente 3, 4, 5 erreicht bzw. unterschreitet, schaltet die Überwachungseinheit 7 einem Spannungsversorgungseingang der jeweiligen Komponente 3, 4, 5 über einen steuerbaren Schalter 18, 19, 20 einen Widerstand 21, 22, 23 zu.

Die Erfindung lässt sich wie folgt zusammenfassen: Ein Verfahren zum Betreiben eines elektrischen Gerätes 1, das mehrere jeweils mit einer internen Reset-Schaltung 12, 13, 14 versehene Hardware-Komponenten 3, 4, 5 aufweist, welche jeweils mit mindestens einer von mehreren Versorgungsspannungen eines Netzteils 2 beaufschlagt werden, die mittels des Netzteils 2 aus einer Eingangsspannung erzeugt werden, wobei die Hardware-Komponenten 3, 4, 5 mittels ihrer jeweiligen Reset-Schaltung 12, 13, 14 in Abhängigkeit ihrer jeweiligen Versorgungsspannung in einen definierten Anfangszustand gesetzt werden, zeichnet sich dadurch aus, dass nach einem vorübergehenden Ausfall der Eingangsspannung mittels einer Überwachungseinheit 7 die Hardware-Komponenten 3, 4, 5 zeitlich verzögert mit den jeweiligen Versorgungsspannungen beaufschlagt werden. Es wird dadurch sichergestellt, dass in allen Hardware-Komponenten 3, 4, 5 nach einem vorübergehenden Netzausfall ein Reset ausgelöst wird und alle Hardware-Komponenten 3, 4, 5 von einem definierten Zustand "weiterlaufen" bzw. betrieben werden können.

## Patentansprüche

1. Verfahren zum Betreiben eines elektrischen Gerätes (1), das mehrere jeweils mit einer internen Reset-Schaltung (12, 13, 14) versehene Hardware-Komponenten (3, 4, 5) aufweist, welche jeweils mit mindestens einer von mehreren Versorgungsspannungen eines Netzteils (2) beaufschlagt werden, die mittels des Netzteils (2) aus einer Eingangsspannung erzeugt werden, wobei die Hardware-Komponenten (3, 4, 5) mittels ihrer jeweiligen Reset-Schaltung (12, 13, 14) in Abhängigkeit ihrer jeweiligen Versorgungsspannung in einen definierten Anfangszustand gesetzt werden, **dadurch gekennzeichnet, dass** nach einem vorübergehenden Ausfall der Eingangsspannung mittels einer Überwachungseinheit (7) die Hardware-Komponenten (3, 4, 5) zeitlich verzögert mit den jeweiligen Versorgungsspannungen beaufschlagt werden.

2. Verfahren nach Anspruch 1, **dadurch gekennzeichnet, dass** bei einem Ausfall der Eingangsspannung mittels der Überwachungseinheit (7) einem Versorgungseingang der jeweiligen Hardware-Komponente (3, 4, 5) ein Widerstand (21, 22, 23) über einen steuerbaren Schalter (18, 19, 20) zugeschaltet wird.

3. Elektrisches Gerät mit mehreren jeweils mit einer internen Reset-Schaltung (12, 13, 14) versehenen Hardware-Komponenten (3, 4, 5) und mit einem Netzteil (2), welches aus einer Eingangsspannung mehrere Versorgungsspannungen zur Versorgung der Hardware-Komponenten (3, 4, 5) erzeugt, wobei in Abhängigkeit der jeweiligen Versorgungsspannung die Reset-Schaltung (12, 13, 14) der jeweiligen Hardware-Komponente (3, 4, 5) diese in einen definierten Anfangszustand setzt, **dadurch gekennzeichnet, dass** das elektrische Gerät (1) eine Überwachungseinheit (7) aufweist, die derart ausgebildet ist, nach einem vorübergehenden Ausfall der Eingangsspannung die Hardware-Komponenten (3, 4, 5) zeitlich verzögert mit den jeweiligen Versorgungsspannungen zu beaufschlagen.

4. Elektrisches Gerät nach Anspruch 3, **dadurch gekennzeichnet, dass** bei einem Ausfall der Eingangsspannung die Überwachungseinheit (7) einem Versorgungseingang der jeweiligen Hardware-Komponente (3, 4, 5) einen Widerstand (21, 22, 23) über einen steuerbaren Schalter (18, 19, 20) zuschaltet.
